# EUROPÄISCHE PATENTSCHRIFT

(11) **EP 2 422 663 B1**
(45) Veröffentlichungstag und Bekanntmachung des Hinweises auf die Patenterteilung: **21.11.2012**
(21) Anmeldenummer: 11006055.5
(22) Anmeldetag: 23.07.2011
(51) Int. Cl.: A47J 31/36

(54) **Brühgruppe für einen Getränkeautomaten**
Brewing element for a beverage machine
Groupe de distribution pour un automate de boissons

(30) Priorität: 27.08.2010 DE 102010037189
(43) Veröffentlichungstag der Anmeldung: 29.02.2012
(73) Patentinhaber: Severin Elektrogeräte GmbH, 59846 Sundern (DE)
(72) Erfinder: Krug, Jörg, 35239 Steffenberg (DE)
(74) Vertreter: Köchling, Conrad-Joachim

(56) Entgegenhaltungen:
- WO-A1-2007/016977
- WO-A1-2008/093232
- FR-A1- 2 769 483

## Beschreibung

Die Erfindung betrifft eine Brühgruppe für einen Getränkeautomaten zur Herstellung eines Brühgetränkes, zum Beispiel Kaffee, mit einer Brühkammer, einem in der Brühkammer drehbeweglich angeordneten Kapselhalter zur Aufnahme einer Kapsel mit einem Brühgetränkeextraktionsgut, mindestens einem in der Brühkammer angeordneten beweglichen Verschlussteil zum Verschließen des Kapselhalters und zur Bildung einer von flüssigem Extraktionsmittel durchströmbaren Extraktionskammer, sowie mit Mitteln zum Penetrieren der im Kapselhalter befindlichen Kapsel, wobei der Kapselhalter über ein manuell oder motorisch antreibbares Getriebe zwischen einer Ladestellung zur Aufnahme der Kapsel, einer Brühstellung bei geschlossener Brühkammer, einer Auswurfstellung zum Auswerfen der Kapsel und zurück in die Ladestellung schwenkbar ist, wobei der Kapselhalter als an beiden Enden offene Hülse ausgebildet ist und zwei Verschlussteile mit jeweils Mitteln zum Penetrieren der im Kapselhalter befindlichen Kapsel vorgesehen sind, wobei ein erstes Verschlussteil entlang einer Längsachse der Brühkammer in Richtung auf die Einsatzöffnung des Kapselhalters und entgegen dieser Richtung beweglich ist und mindestens in der Schließstellung dicht an die Einsatzöffnung anpressbar ist, ein zweites Verschlussteil entlang der Längsachse der Brühkammer verschieblich in der Brühkammer angeordnet ist und in Richtung auf das der Einsatzöffnung abgewandte Ende des Kapselhalters und entgegen dieser Richtung verstellbar ist, so dass es mindestens in der Schließstellung dicht an das Ende des Kapselhalters angedrückt ist.

Die Erfindung betrifft ferner eine Brühgruppe für einen Getränkeautomaten zur Herstellung eines Brühgetränkes, zum Beispiel Kaffee, mit einer Brühkammer, einem in der Brühkammer drehbeweglich angeordneten Kapselhalter zur Aufnahme einer Kapsel mit einem Brühgetränkeextraktionsgut, mindestens einem in der Brühkammer angeordneten beweglichen Verschlussteil zum Verschließen des Kapselhalters und zur Bildung einer von flüssigem Extraktionsmittel durchströmbaren Extraktionskammer, sowie mit Mitteln zum Penetrieren der im Kapselhalter befindlichen Kapsel, wobei der Kapselhalter über ein manuell oder motorisch antreibbares Getriebe zwischen einer Ladestellung zur Aufnahme der Kapsel, einer Brühstellung bei geschlossener Brühkammer, einer Auswurfstellung zum Auswerfen der Kapsel und zurück in die Ladestellung schwenkbar ist, wobei der Kapselhalter als an beiden Enden offene Hülse ausgebildet ist und zwei Verschlussteile mit jeweils Mitteln zum Penetrieren der im Kapselhalter befindlichen Kapsel vorgesehen sind, wobei ein erstes Verschlussteil entlang einer Längsachse der Brühkammer in Richtung auf die Einsatzöffnung des Kapselhalters und entgegen dieser Richtung beweglich ist und mindestens in der Schließstellung dicht an die Einsatzöffnung anpressbar ist.

Eine Brühgruppe ist beispielsweise aus der EP 1 912 542 B1 bekannt. Bei der bekannten Ausbildung wird als nachteilig angesehen, dass der Kapselhalter ein einseitig offenes, becherartiges Element ist. In diesen Kapselhalter kann eine entsprechende Kapsel zwar eingesetzt werden und der Brühvorgang eingeleitet beziehungsweise auch beendet werden, jedoch ist es für solche Kapseln erforderlich, dass Penetriermittel sowohl am Boden der Kapsel als auch an der Deckfläche der Kapsel angreifen können. Deshalb ist im Stand der Technik der Boden des Kapselhalters mit Penetriermitteln ausgestattet, die beim Schließen der Brühkammer in den Boden der Kapseln eindringen und diesen öffnen. Die an dem Verschlussteil der Kapsel vorgesehenen weiteren Penetriermittel dringen in den Deckel der Kapsel ein und durchdringen diesen. Sofern der Brühvorgang beendet ist, soll die Kapsel durch Drehung des Kapselhalters ausgeworfen werden. Dies bereitet aber Schwierigkeiten, weil die Penetriermittel am Boden des Kapselhalters die Kapsel nicht freigeben, sondern zurückhalten. Für den Benutzer ist es deshalb häufig schwierig, die Kapsel aus dem Kapselhalter zu entfernen.

Eine ähnliche konstruktive Lösung ist aus der WO2007/016977 A1 bekannt.

Aus der WO2008/093232 A1 ist eine Ausgestaltung bekannt, wie sie im Oberbegriff des Anspruches 1 und des Anspruches 2 angegeben ist.

Ausgehend von diesem Stand der Technik liegt der Erfindung die Aufgabe zugrunde, eine Brühgruppe gattungsgemäßer Art zu schaffen, bei der in einfacher Weise und nahezu zwingend die Kapseln nach Beendigung des Brühvorganges aus dem Kapselhalter abgeworfen werden kann, ohne dass die Kapsel durch Penetriermittel oder dergleichen festgehalten wird, wobei zudem die Betätigung besonders einfach und zweckmäßig möglich sein soll.

Zur Lösung dieser Aufgabe schlägt die Erfindung vor, dass die Brühgruppe einen drehbeweglich gelagerten Kapselhalter sowie je das in Richtung der Längsachse der Brühkammer verfahrbare erste und zweite Verschlussteil aufweist, wobei die Kammer in Seitenwänden gelagerte Kurbelräder mit Pleuelstangen aufweist, und mittels der Kurbelräder das erste Verschlussteil verfahrbar ist, mittels der Pleuelstangen das zweite Verschlussteil verfahrbar ist und über Nocken der Kurbelräder der Kapselhalter drehbar ist.

Eine alternative Lösung ist dadurch gekennzeichnet, dass ein zweites Verschlussteil unverschieblich in der Brühkammer angeordnet ist, wobei der Kapselhalter entlang der Längsachse der Brühkammer verschieblich ist und mit seinem der Einsatzöffnung abgewandten Ende mindestens in der Schließstellung dicht an das zweite Verschlussteil angedrückt ist, und dass die Brühgruppe einen drehbeweglich gelagerten und in Richtung der Längsachse der Brühkammer verfahrbaren Kapselhalter aufweist, das in Richtung der Längsachse der Brühkammer verfahrbare erste Verschlussteil sowie das stationäre zweite Verschlussteil aufweist, wobei die Kammer in Seitenwänden gelagerte Kurbelräder mit Pleuelstangen aufweist und mittels der Pleuelstangen das erste Verschlussteil verfahrbar ist und über Nocken und Steuerkurven der Kurbelräder der Kapselhalter drehbar und in Richtung der Längsachse verfahrbar ist.

In den Ansprüchen sind zwei Lösungsmöglichkeiten angegeben. Grundsätzlich ist bei der Erfindung vorgesehen, dass der Kapselhalter als an beiden Enden offene Hülse ausgebildet ist. Dies bedeutet, dass in den Kapselhalter eine Kapsel eingeführt werden kann und in diesem gehalten werden kann, wobei die Kapsel weder mündungsseitig an ihrer Deckfläche noch bodenseitig an ihrer Bodenfläche durch Penetriermittel des Kapselhalters beeinflusst wird. Vielmehr sind diese Flächen offen und ohne irgendwelche Rückhalteinrichtungen. Die Mittel zum Penetrieren der Kapsel sind hierbei einerseits an dem ersten Verschlussteil und andererseits an dem zweiten Verschlussteil ausgebildet.

Die erste Lösung der Erfindung sieht dabei vor, dass der Kapselhalter lediglich drehbar gehalten ist, nicht aber in Längsrichtung der Brühkammer verschieblich. Das erste Verschlussteil ist entlang einer Längsachse der Brühkammer verschieblich und ebenso ist das zweite Verschlussteil verschieblich. Bei dieser Ausgestaltung ist der Ablauf derart, dass zunächst bei Beginn des Zubereitungsvorganges der Kapselhalter in eine Stellung verbracht ist, in der die Öffnung zur Aufnahme der Kapseln nach oben zeigt. Die ersten und zweiten Verschlussteile sind jeweils in ihre Endlage zurück verschoben. Wird nun die Kapsel in den Kapselhalter eingesetzt, wird der Kapselhalter in die Solllage verdreht, in der seine Mündung dem ersten Verschlussteil zugewandt ist und sein der Mündung abgewandtes Ende dem zweiten Verschlussteil. Gleichzeitig werden die Verschlussteile zum Kapselhalter hin verschoben, wobei in der Endlage die Verschlussteile dicht an der Mündung beziehungsweise am anderen Ende des Kapselhalters anliegen und mit ihren Penetrierelementen den Kapselboden beziehungsweise den Kapseldeckel der eingesetzten Kapsel durchsetzen, so dass die Kapsel von heißem Wasser durchströmt werden kann und die Zubereitung des Getränkes erfolgen kann. Nach Beendigung des Brühvorganges werden die beiden Verschlussteile vom Kapselhalter entfernt und der Kapselhalter wird soweit gedreht, dass seine Einfüllöffnung nach unten weist, so dass dann die im Kapselhalter befindliche Kapsel nach unten abgeworfen werden kann. Dabei ist kein Hindernis vorhanden, welches die Kapsel halten könnte, sondern die Kapsel ist frei auswerfbar.

Anschließend werden alle Elemente in die Grundstellung zurückgeführt und es kann ein neuer Brühvorgang mit einer neuen Kapsel erfolgen.

Um die Betätigung besonders einfach und zweckmäßig durchführen zu können, ist vorgesehen, dass die Brühgruppe einen drehbeweglich gelagerten Kapselhalter sowie je das in Richtung der Längsachse der Brühkammer verfahrbare erste und zweite Verschlussteil aufweist, wobei die Kammer in Seitenwänden gelagerte Kurbelräder mit Pleuelstangen aufweist, und mittels der Kurbelräder das erste Verschlussteil verfahrbar ist, mittels der Pleuelstangen das zweite Verschlussteil verfahrbar ist und über Nocken der Kurbelräder der Kapselhalter drehbar ist.

Bei der alternativen Lösung ist das erste Verschlussteil wiederum in Richtung der Längsachse der Brühkammer verschieblich. Der Kapselhalter ist drehbar und ebenfalls entlang der Längsachse der Brühkammer verschieblich. Das zweite Verschlussteil ist stationär in der Kammer angeordnet. Hierbei ist der Ablauf wie folgt. In der Ausgangsstellung weist der Kapselhalter mit seiner Einführöffnung für die Kapsel nach oben. Die Kapsel kann eingesetzt werden. Anschließend wird der Kapselhalter gedreht, so dass seine Mündung dem ersten Verschlussteil zugewandt ist und sein anderes Ende dem zweiten Verschlussteil zugewandt ist. Anschließend wird das erste Verschlussteil und der Kapselhalter in Richtung auf das zweite Verschlussteil entlang der Längsachse der Brühkammer verschoben, bis alle

Teile dicht auf Anlage sind. In dieser Position wird die Kapsel durch die Penetriermittel des ersten Verschlussteiles und die Penetriermittel des zweiten Verschlussteiles geöffnet, so dass der Brühvorgang ablaufen kann.

Nach Beendigung des Brühvorganges wird das erste Verschlussteil zurück verschoben und ebenso der Kapselhalter von dem zweiten Verschlussteil entfernt, bis ein ausreichender Abstand erreicht ist, so dass der Kapselhalter gedreht werden kann. Der Kapselhalter wird dann so gedreht, dass seine Einfüllöffnung nach unten weist, so dass die darin befindliche Kapsel abgeworfen werden kann. Auch hierbei sind keine Rückhaltemittel in Form von Penetrationsmitteln oder dergleichen vorhanden, sondern die Kapsel ist frei in dem Kapselhalter beweglich. Anschließend erfolgt eine Zurückbewegung aller Elemente in die Ausgangsstellung, so dass dann ein erneuter Brühvorgang anlaufen kann.

Um die Betätigung besonders einfach und zweckmäßig durchführen zu können, ist vorgesehen, dass die Brühgruppe einen drehbeweglich gelagerten und in Richtung der Längsachse der Brühkammer verfahrbaren Kapselhalter aufweist, das in Richtung der Längsachse der Brühkammer verfahrbare erste Verschlussteil sowie das stationäre zweite Verschlussteil aufweist, wobei die Kammer in Seitenwänden gelagerte Kurbelräder mit Pleuelstangen aufweist und mittels der Pleuelstangen das erste Verschlussteil verfahrbar ist und über Nocken und Steuerkurven der Kurbelräder der Kapselhalter drehbar und in Richtung der Längsachse verfahrbar ist.

Insbesondere ist bei beiden Lösungen vorgesehen, dass die Kurbelräder über einen Schrittmotor mit Antriebswelle antreibbar sind.

Die Erfindung ist nachstehend anhand von Ausführungsbeispielen näher erläutert. Es zeigt:
- Figur 1: eine erste Ausführungsform der Erfindung in Schrägansicht;
- Figur 2 bis Figur 14: Einzelheiten der Vorrichtung in unterschiedlichen Funktionsstellungen;
- Figur 15: eine Variante in Ansicht;
- Figur 16 bis Figur 33: die Variante in Einzelheiten und in unterschiedlichen Funktionsstellungen.

Um die Verarbeitung von Getränkekapseln in einem Getränkeautomaten für den Konsumenten zu vereinfachen, umfasst der Aufbau einer Brühgruppe des Getränkeautomaten einen automatisierten Kapselauswurf in einer kompakten Bauform. Die konstruktiven Lösungen sind mechanisch, wobei im Ausführungsbeispiel als Antrieb ein Schrittmotor vorgesehen ist.

Im Einzelnen:

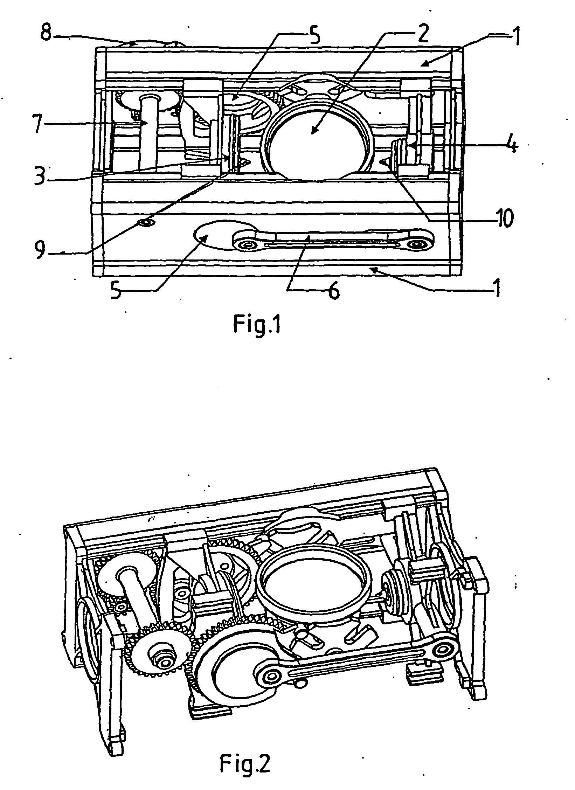

In Figur 1 sind die wesentlichen Elemente einer Brühgruppe gezeigt. Sie besteht aus einem Gehäuse 1, welches quasi die Brühgruppe bildet oder beinhaltet und welches eine Brühkammer insgesamt umschließt. An dem Gehäuse ist mittelbar ein Kapselhalter 2 drehbar gelagert, der eine Kapsel 22 während des Brühvorganges aufnimmt. Ferner sind Verschlussteile vorgesehen, nämlich ein in Längsrichtung der Mittelachse der Brühkammer verfahrbares erstes Verschlussteil 3 und ein in gleicher Richtung verfahrbares zweites Verschlussteil 4. Die Bewegung erfolgt über zwei Kurbelräder 5, die koaxial zueinander ausgerichtet sind, in Verbindung mit zwei Pleuelstangen 6. (In Figur 1 ist nur eine ersichtlich. Die andere liegt auf der Rückseite, die in der Zeichnung nicht sichtbar ist). Es sind das erste Verschlussteil 3 und das zweite Verschlussteil 4 mechanisch verschiebbar miteinander verbunden. Das Drehen des Kapselhalters 2 erfolgt über entsprechende Schaltnocken an den Kurbelrädern 5. Die Kurbelräder 5 werden über eine Antriebswelle 7 und einen Schrittmotor 8 synchron angetrieben. Das Gehäuse 1 weist sowohl Führungselemente für das erste und zweite Verschlussteil 3,4 auf, als auch Elemente zur Lagerung des Kapselhalters 2, der Kurbelräder 5, der Antriebswelle 7 und des Schrittmotors 8.

Der Brühvorgang erfolgt im Wesentlichen in drei Schritten, in denen die Bauteile unterschiedliche Stellung einnehmen, nämlich die Ladestellung, die Brühstellung und die Auswurfstellung.

In Figur 1 und 2 ist die Ladestellung gezeigt. Hierbei ist die Brühgruppe geöffnet, dass heißt, das erste Verschlussteil 3 und das zweite Verschlussteil 4 sind auseinander gefahren und der Kapselhalter 2 weist mit seiner Einfüllöffnung nach oben. Der Kapselhalter 2 ist als beidseitig offene Hülse ausgebildet.

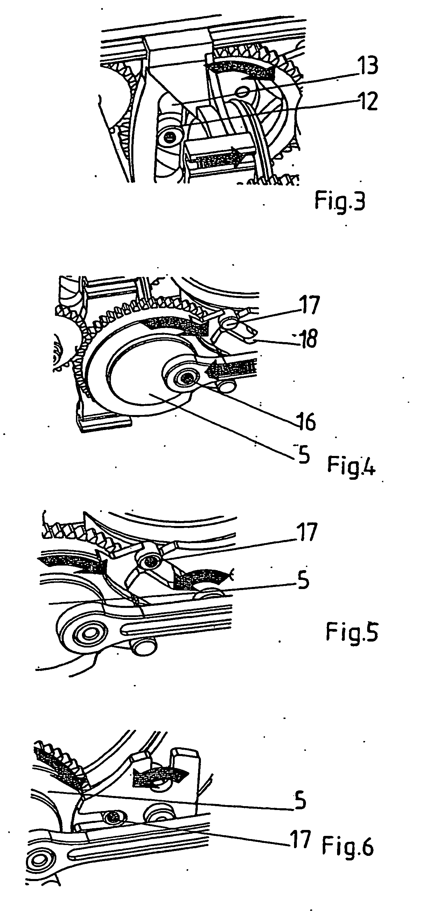

Die Penetriermittel 9,10 zum Öffnen der Kapsel 22, die in den Kapselhalter 2 eingesetzt wird, sind am ersten Verschlussteil 3 und am zweiten Verschlussteil 4 ausgebildet. Die Penetriermittel 9 beziehungsweise 10 sind beispielsweise in Figur 1 ersichtlich. In der Position gemäß Figur 1 und 2 kann die Kapsel 22 in den Kapselhalter 2 eingelegt werden. Anschließend wird der Brühvorgang gestartet. Hierbei treibt der Schrittmotor 8 über die Antriebswelle 7 die Kurbelräder 5 an. Über einen großen Steuernocken 12 an der Innenseite der Kurbelräder 5 beziehungsweise über die Pleuelstangen 6, die exzentrisch an der Außenseite der Kurbelräder 5 angeordnet sind, fahren das erste und das zweite Verschlussteil 3,4 zusammen. Gleichzeitig wird der Kapselhalter 2 durch einen außen liegenden Steuernocken 16 der Kurbelräder 5 um 90 ° gedreht. Dies ist in den Figuren 3 bis 6 gezeigt. In Figur 3 ist der Nocken 12 auf der Innenseite der Kurbelräder 5 zu sehen, der in einem Langloch läuft, der Bestandteil der Kinematik des ersten Verschlussteiles 3 ist. In Figur 4 ist der Nocken 16 auf der Außenseite des Kurbelrades 5 gezeigt, mittels dessen über die Pleuelstange 6 das zweite Verschlussteil 4 verschoben wird. Der außen liegende Nocken 17 an den Kurbelrädern 5 wiederum greift in eine Steuernut 18 des Kapselhalters 2 ein, so dass dieser mitgenommen und verdreht wird, wie aus der Gegenüberstellung der Figuren 4 bis 6 ersichtlich ist.

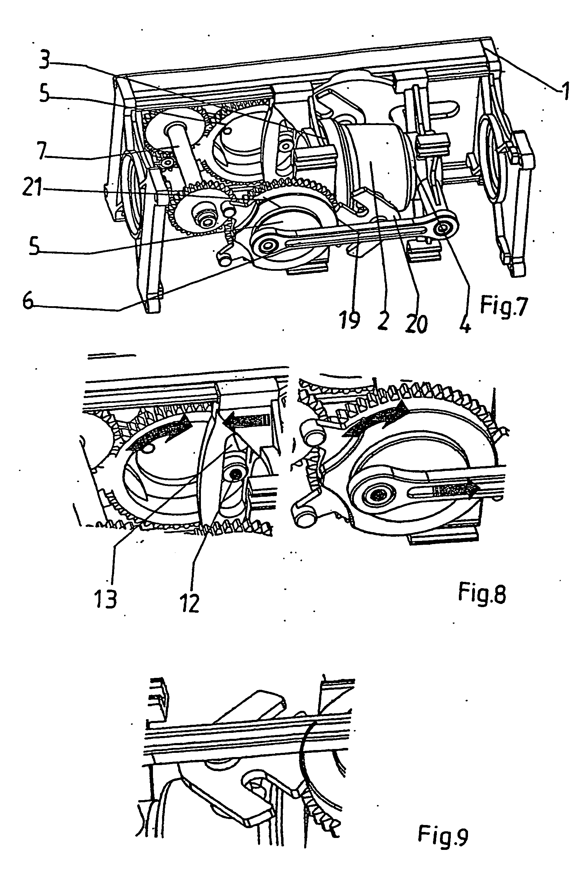

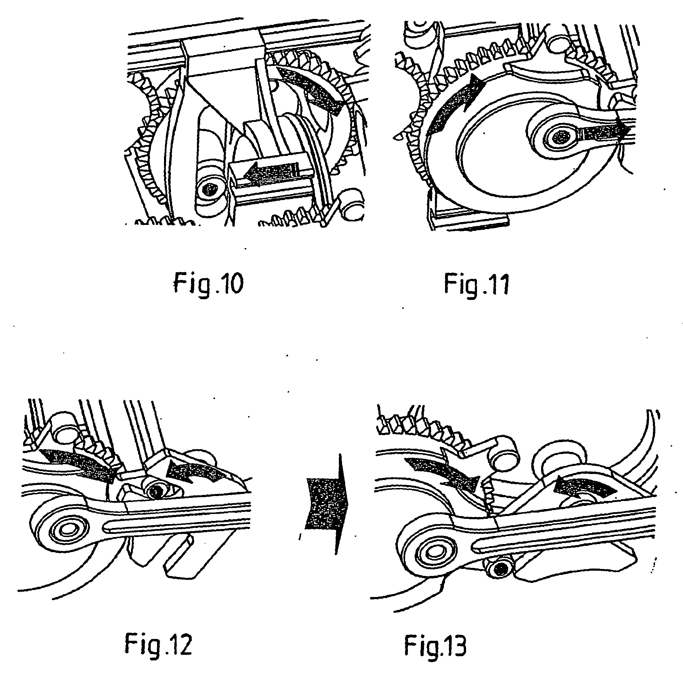

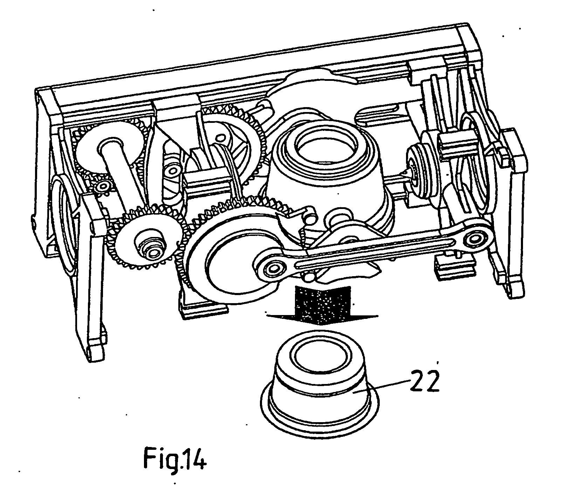

In der Position gemäß Figur 7 ist die Brühgruppe geschlossen. Das erste und das zweite Verschluss-Stück 3,4 sind zusammengefahren und greifen dicht in die Mündung beziehungsweise die Bodenseite des Kapselhalters 2 ein, der um 90 ° gegenüber der Ausgangsposition nach Figur 1 gedreht ist. Durch Dichtungen an den Verschlussteilen 3,4 ist der Kapselhalter 2 abgedichtet. Über Schlauchanschlüsse an den Verschlussteilen 3,4 kann heißes Wasser vom ersten Verschlussteil 3 her durch die Kapsel 22 im Kapselhalter 2 hindurch zum zweiten Verschlussteil 4 gefördert werden. An diesem Verschlussteil tritt das fertige Getränk über eine entsprechende Ablassleitung aus. Ist die Brühgruppe komplett zusammengefahren, wie in Figur 7 gezeigt, so wird diese Stellung beibehalten, bis das Getränk zubereitet ist. Anschließend treibt der Schrittmotor 8 die Kurbelräder 5 weiter an, im gleichen Drehsinn, um die Brühgruppe wieder zu öffnen. Der weitere Ablauf ist in den Figuren 8 bis 13 gezeigt. Die Kontur 19 an den Stellelementen 20 des Kapselhalters 2 verhindert in Verbindung mit der Kontur 21 der Kurbelräder 5 ein Verdrehen des Kapselhalters 2. Erst bei weiterer Drehung des Kurbelrades 5, wie in Figur 10,11 und 12 gezeigt, wird durch Nocken 17 des Kurbelrades 5 wiederum das Stellelement 20 des Kapselhalters 2 beeinflusst und der Kapselhalter 2 um weitere 90 ° nach unten gedreht. Kurz bevor die Auswurfstellung erreicht ist, wird, wie in Figur 12 und 13 gezeigt, durch die außen liegenden Nocken an den Kurbelrädern 5 über eine weitere Nut in dem Steuerelement 20 des Kapselhalters 2, die weitere Drehung desselben um weitere 90 ° erreicht. Im Ergebnis ergibt sich dann die Stellung, wie sie in Figur 14 gezeigt ist. Dabei ist die Brühgruppe geöffnet, das erste und das zweite Verschlussteil 3,4 sind auseinander gefahren und der Kapselhalter 2 ist mit seiner Befüllöffnung nach unten gerichtet. Die Kapsel 22 kann somit nach unten herausfallen. Da der Kapselhalter 2 oben und unten offen ist, sind keine Hindernisse gebildet, die die Kapsel 22 zurückhalten könnten.

Ist die Brühgruppe in die Auswurfstellung verfahren und die Kapsel 22 ausgeworfen, fährt die Brühgruppe zurück in die Ladestellung gemäß Figur 1. Hierzu treibt der Schrittmotor 8 die Kurbelräder 5 in entgegensetzter Richtung an. Der komplette Vorgang läuft in umgekehrter Richtung ab, bis die Ladestellung wieder erreicht ist.

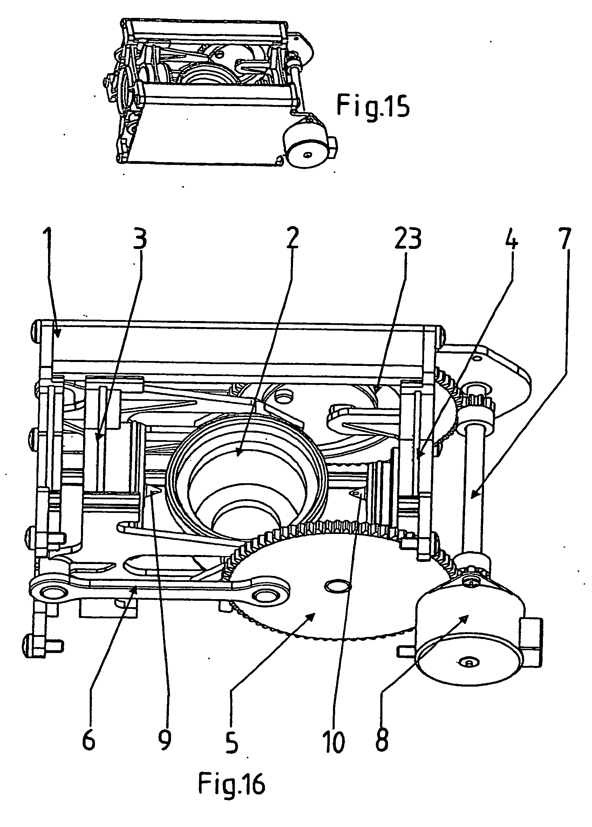

Bei dem Ausführungsbeispiel gemäß Figur 15 bis Figur 33 sind gleiche Teile mit gleichen Bezugszeichen angegeben. Im Gegensatz zu der Lösung gemäß Figur 1 bis 14 ist hierbei der Kapselhalter 2 nicht nur drehbar, sondern auch verschiebbar gehalten, während das zweite Verschlussteil 4 stationär im Gehäuse 1 angeordnet ist. Die Kurbelräder 5 sind am Gehäuse gelagert. Durch Drehung der Kurbelräder 5 wird das erste Verschlussteil 3 über die Pleuelstangen 6 verschoben. Gleichzeitig wird der Kapselhalter 2 durch die Steuerkurve 23 in dem Kurbelrad 5 verfahren und über Nocken, an den Kurbelrädern 5 innen liegend, gedreht. Die Kurbelräder 5 werden über eine Antriebswelle 7 und einen Schrittmotor synchron angetrieben. Das Gehäuse 1 weist gleichzeitig Führungen für die Verschiebung des ersten Verschlussteiles 3 auf.

In Figur 15 bis 17 ist die Ladestellung gezeigt. Hierbei ist die Brühgruppe geöffnet. Das erste Verschlussteil 3 ist maximal in der Zeichnung nach links verfahren. Der Kapselhalter 2 ist ebenfalls maximal nach links verfahren und weist mit seiner Befüllöffnung nach oben. Der Kapselhalter 2 ist wiederum als beidseitig offene Hülse ausgebildet. Die Penetriermittel 9,10 für die Kapsel 22 sind an den Verschlussteilen 3,4 ausgebildet.

In dieser Stellung kann die Kapsel 22 in den Kapselhalter 2 eingelegt werden und der Brühvorgang gestartet werden.

Der Kapselhalter 2 ist gleichzeitig in der Steuerkurve 23 und in einer Nut des ersten Verschlussteiles 3 gelagert und wird durch die Nocken des Kurbelrades 5 fixiert. Wird der Brühvorgang gestartet, treibt der Schrittmotor 8 über die Antriebswelle 7 die Kurbelräder 5 an. Durch die Drehbewegung der Kurbelräder 5 und den Verlauf der Steuerkurve wird der Kapselhalter 2 verfahren und gleichzeitig durch die Nocken der Kurbelräder 5 gedreht. Über die Pleuelstangen 6 verfährt gleichzeitig das erste Verschlussteil 3 nach rechts.

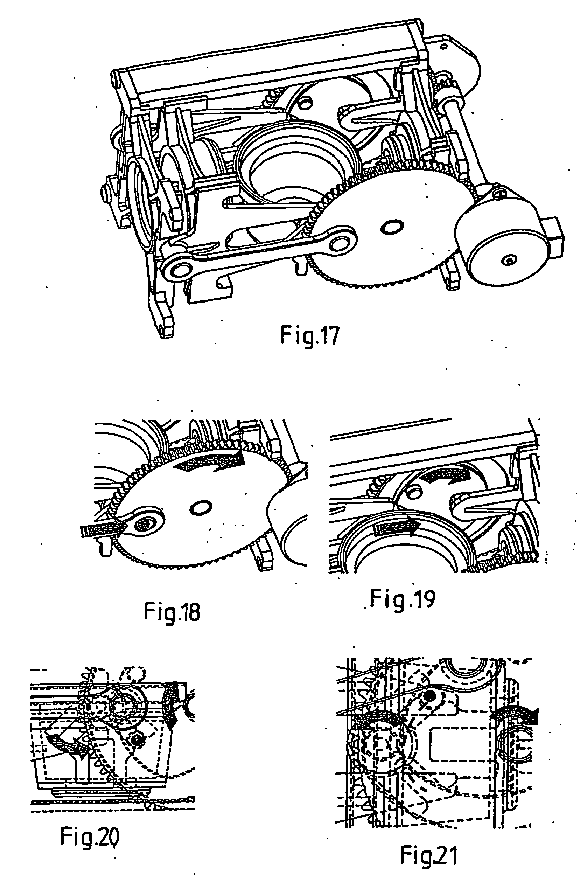

Die Bewegungsabläufe sind in den Figuren im Einzelnen verdeutlicht. In Figur 18 ist gezeigt, dass bei Drehung der Kurbelräder 5 das erste Verschlussteil 3 durch die Pleuelstangen 6 verschoben wird. In der Figur 19 ist gezeigt, wie die Steuerkurve in den Kurbelräder 5 den Kapselhalter 2 verfährt. Dies ist in Figur 20 und 21 auch gezeigt. Die Nocken an der Innenseite der Kurbelräder 5 drehen dabei den Kapselhalter 2.

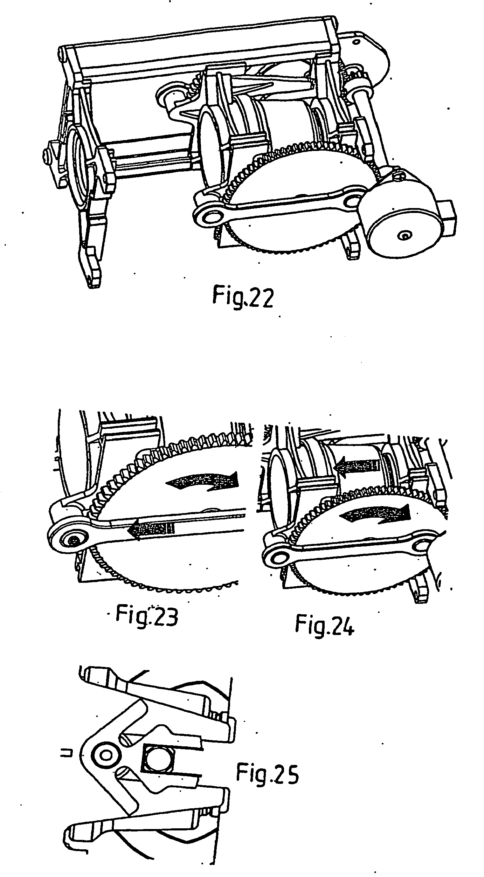

In Figur 22 ist gezeigt, dass die Brühgruppe geschlossen ist. Das erste Verschlussteil 3 ist nach rechts verfahren. Der Kapselhalter 2 ist um 90 ° gedreht und ebenfalls nach rechts verfahren. Durch Dichtungen an dem ersten Verschlussteil 3 und an dem zweiten Verschlussteil 4 ist der Kapselhalter 2 abgedichtet. Über Schlauchanschlüsse an dem ersten Verschlussteil 3 und an dem zweiten Verschlussteil 4 kann heißes Wasser vom Einlass her durch den Kapselhalter 2 zum Auslass hin gefördert werden. Am Auslass kann das fertige Getränk abgenommen werden.

Ist die Brühgruppe komplett zusammengefahren, wird diese Stellung beibehalten, bis das Getränk zubereitet ist. Anschließend treibt der Schrittmotor 8 die Kurbelräder 5 wieder an, um die Brühgruppe zu öffnen. Dies ist in den weiteren Figuren 23 bis 29 erläutert.

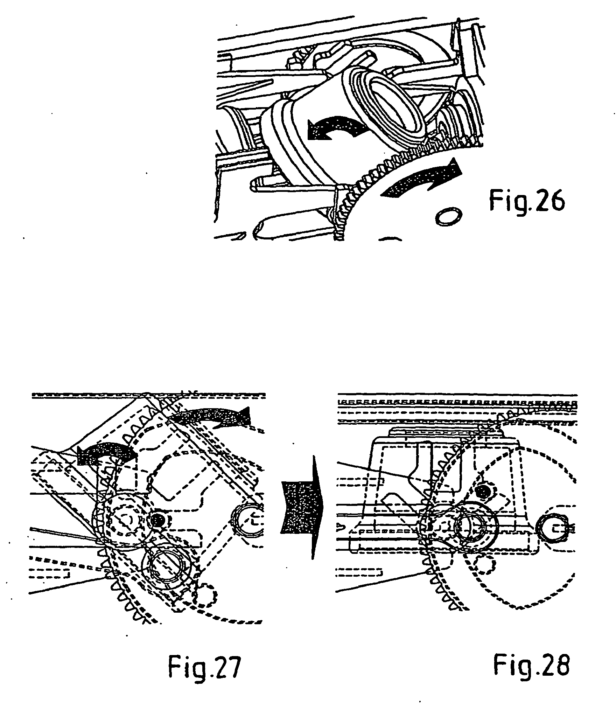

Eine Nut in dem Kurbelrad 5 des Kapselhalters 2, die die Lagerstelle des Kurbelrades 5 in dem zweiten Verschlussteil 4 umschließt, verhindert das Verdrehen des Kapselhalters 2, wenn die Nocken zum Verdrehen des Kapselhalters 2 nicht in Eingriff sind. Wie in Figur 26 bis 28 verdeutlicht, geschieht Folgendes. Kurz bevor die Auswurfstellung erreicht ist, verdrehen die Nocken an der Innenseite der Kurbelräder 5 über eine weitere Nut den Kapselhalter 2 um weitere 90 °.

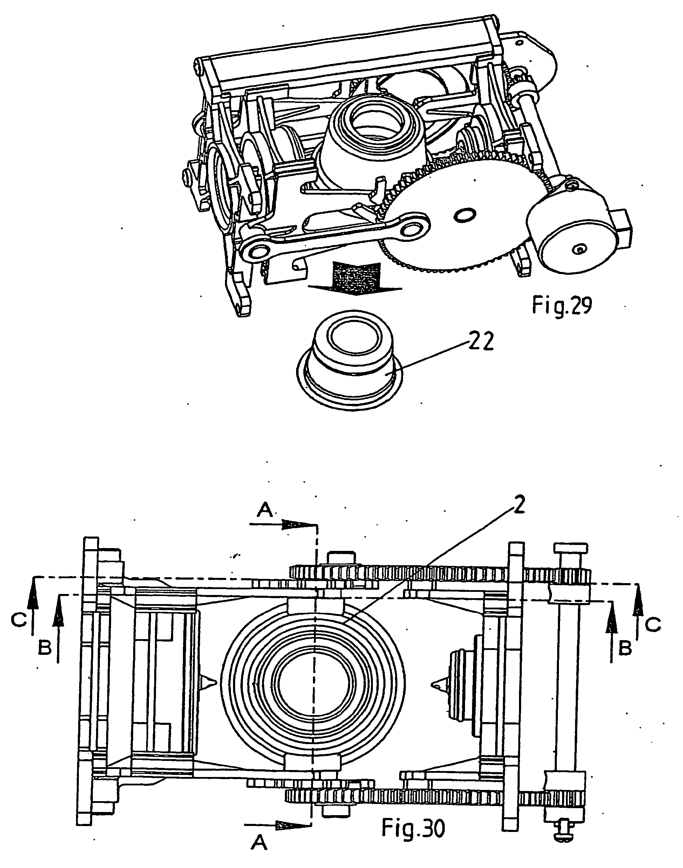

Die Endstellung ist dann gemäß Figur 29 erreicht. Ist die Kapsel 22 dann ausgeworfen, fährt die Brühgruppe zurück in die Ladestellung. Hierzu treibt der Schrittmotor 8 die Kurbelräder 5 in entgegen gesetzter Richtung an. Der komplette Vorgang verläuft in umgekehrter Richtung, bis die Ladestellung wieder erreicht ist.

In Figur 29 ist die Brühgruppe geöffnet. Das erste Verschlussteil 3 ist in die Maximal-Stellung nach links verschoben. Der Kapselhalter 2 ist maximal nach links verfahren und nach unten gerichtet. Die Kapsel 22 kann nach unten ausgeworfen werden.

In Figur 30 ist die Lagerung des Kapselhalters 2 nochmals deutlich gezeigt. Die Darstellung ist dabei in Draufsicht ohne Gehäuseteile und ohne Pleuelstange 6 gezeigt. Der Kapselhalter 2 wird auf einem größeren Lagerzapfen in einer Nut des ersten Verschlussteiles 3 linear geführt (siehe Schnitt B-B) und gleichzeitig auf einem kleineren Lagerzapfen in der Steuerkurve des Kurbelrades 5 (siehe Schnitt

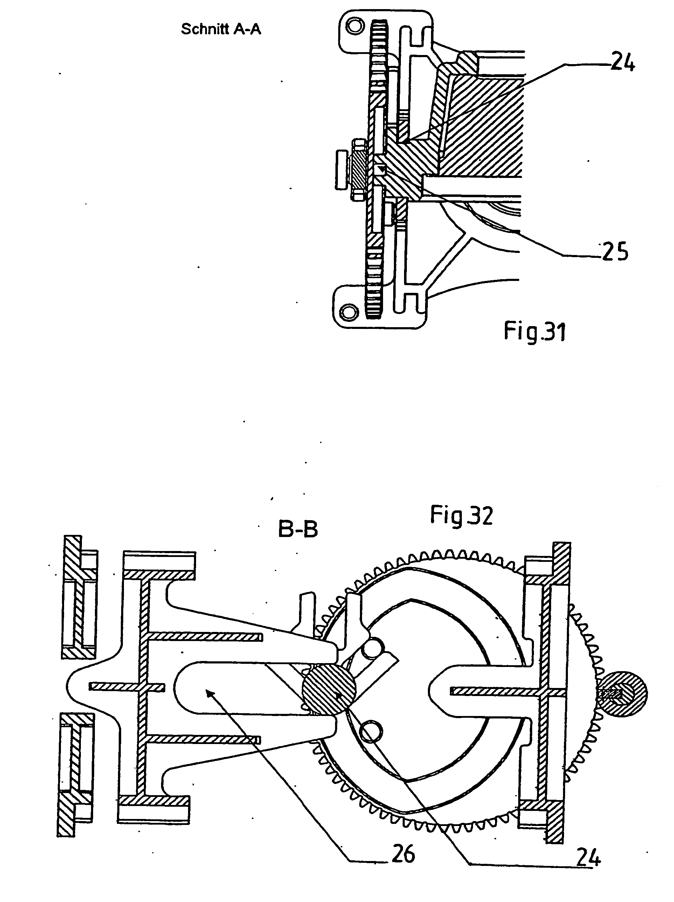

C-C) geführt. Durch diese kombinierte Lagerung ist der Kapselhalter 2 in seiner Lage fixiert. Der große Lagerzapfen ist in Figur 31 mit 24 bezeichnet, während der kleine Lagerzapfen mit 25 bezeichnet ist. Im Schnitt B-B ist der große Lagerzapfen 24 und die Nut 26 gezeigt, die Bestandteil des ersten Verschlussteiles 3 ist.

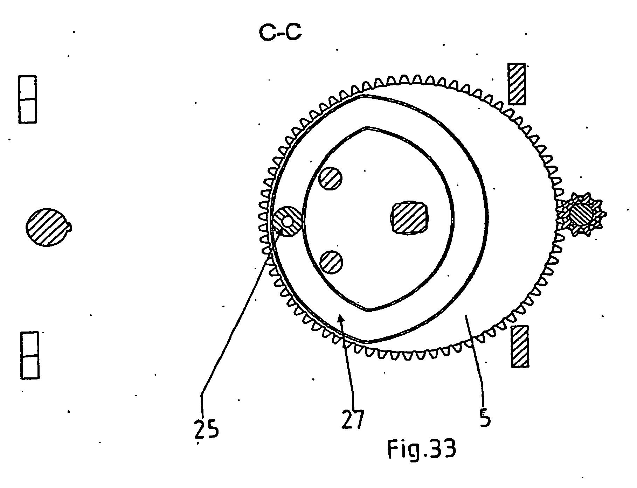

In Figur 33 schließlich ist der kleine Lagerzapfen 25 und die Steuerkurve 27 in dem Kurbelrad 5 gezeigt.

Die Erfindung ist nicht auf das Ausführungsbeispiel beschränkt, sondern im Rahmen der Offenbarung vielfach variabel.

## Patentansprüche

1. Brühgruppe für einen Getränkeautomaten zur Herstellung eines Brühgetränkes, zum Beispiel Kaffee, mit einer Brühkammer, einem in der Brühkammer drehbeweglich angeordneten Kapselhalter (2) zur Aufnahme einer Kapsel (22) mit einem Brühgetränkeextraktionsgut, mindestens einem in der Brühkammer angeordneten beweglichen Verschlussteil zum Verschließen des Kapselhalters (2) und zur Bildung einer von flüssigem Extraktionsmittel durchströmbaren Extraktionskammer, sowie mit Mitteln zum Penetrieren der im Kapselhalter (2) befindlichen Kapsel (22), wobei der Kapselhalter (2) über ein manuell oder motorisch antreibbares Getriebe zwischen einer Ladestellung zur Aufnahme der Kapsel (22), einer Brühstellung bei geschlossener Brühkammer, einer Auswurfstellung zum Auswerfen der Kapsel (22) und zurück in die Ladestellung schwenkbar ist, wobei der Kapselhalter (2) als an beiden Enden offene Hülse ausgebildet ist und zwei Verschlussteile (3,4) mit jeweils Mitteln (9,10) zum Penetrieren der im Kapselhalter (2) befindlichen Kapsel (22) vorgesehen sind, wobei ein erstes Verschlussteil (3) entlang einer Längsachse der Brühkammer in Richtung auf die Einsatzöffnung des Kapselhalters (2) und entgegen dieser Richtung beweglich ist und mindestens in der Schließstellung dicht an die Einsatzöffnung anpressbar ist, ein zweites Verschlussteil (4) entlang der Längsachse der Brühkammer verschieblich in der Brühkammer angeordnet ist und in Richtung auf das der Einsatzöffnung abgewandte Ende des Kapselhalters (2) und entgegen dieser Richtung verstellbar ist, so dass es mindestens in der Schließstellung dicht an das Ende des Kapselhalters (2) angedrückt ist, **dadurch gekennzeichnet, dass** die Brühgruppe einen drehbeweglich gelagerten Kapselhalter (2) sowie je das in Richtung der Längsachse der Brühkammer verfahrbare erste und zweite Verschlussteil (3,4) aufweist, wobei die Kammer in Seitenwänden gelagerte Kurbelräder (5) mit Pleuelstangen (6) aufweist, und mittels der Kurbelräder (5) das erste Verschlussteil (3) verfahrbar ist, mittels der Pleuelstangen (6) das zweite Verschlussteil (4) verfahrbar ist und über Nocken der Kurbelräder (5) der Kapselhalter (2) drehbar ist.

2. Brühgruppe für einen Getränkeautomaten zur Herstellung eines Brühgetränkes, zum Beispiel Kaffee, mit einer Brühkammer, einem in der Brühkammer drehbeweglich angeordneten Kapselhalter (2) zur Aufnahme einer Kapsel (22) mit einem Brühgetränkeextraktionsgut, mindestens einem in der Brühkammer angeordneten beweglichen Verschlussteil zum Verschließen des Kapselhalters (2) und zur Bildung einer von flüssigem Extraktionsmittel durchströmbaren Extraktionskammer, sowie mit Mitteln zum Penetrieren der im Kapselhalter (2) befindlichen Kapsel (22), wobei der Kapselhalter (2) über ein manuell oder motorisch antreibbares Getriebe zwischen einer Ladestellung zur Aufnahme der Kapsel (22), einer Brühstellung bei geschlossener Brühkammer, einer Auswurfstellung zum Auswerfen der Kapsel (22) und zurück in die Ladestellung schwenkbar ist, wobei der Kapselhalter (2) als an beiden Enden offene Hülse ausgebildet ist und zwei Verschlussteile (3,4) mit jeweils Mitteln (9,10) zum Penetrieren der im Kapselhalter (2) befindlichen Kapsel (22) vorgesehen sind, wobei ein erstes Verschlussteil (3) entlang einer Längsachse der Brühkammer in Richtung auf die Einsatzöffnung des Kapselhalters (2) und entgegen dieser Richtung beweglich ist und mindestens in der Schließstellung dicht an die Einsatzöffnung anpressbar ist, **dadurch gekennzeichnet, dass** ein zweites Verschlussteil (4) unverschieblich in der Brühkammer angeordnet ist, wobei der Kapselhalter (2) entlang der Längsachse der Brühkammer verschieblich ist und mit seinem der Einsatzöffnung abgewandten Ende mindestens in der Schließstellung dicht an das zweite Verschlussteil (4) angedrückt ist, und dass die Brühgruppe einen drehbeweglich gelagerten und in Richtung der Längsachse der Brühkammer verfahrbaren Kapselhalter (2) aufweist, das in Richtung der Längsachse der Brühkammer verfahrbare erste Verschlussteil (3) sowie das stationäre zweite Verschlussteil (4) aufweist, wobei die Kammer in Seitenwänden gelagerte Kurbelräder (5) mit Pleuelstangen (6) aufweist, und mittels der Pleuelstangen (6) das erste Verschlussteil (3) verfahrbar ist und über Nocken und Steuerkurven der Kurbelräder (5) der Kapselhalter (2) drehbar und in Richtung der Längsachse verfahrbar ist.

3. Brühgruppe nach einem der Ansprüche 1 oder 2, **dadurch gekennzeichnet, dass** die Kurbelräder (5) über einen Schrittmotor (8) mit Antriebswelle (7) antreibbar sind.

## Claims

1. A brewing unit for a vending machine for producing a brewed beverage, for instance coffee, comprising a brewing chamber, a capsule holder (2) rotatably mounted in the brewing chamber for receiving a capsule (22) with an extraction material for the brewed beverage, at least one movable closure part located in the brewing chamber for closing the capsule holder (2) and for forming an extraction chamber that can be flowed through by a liquid extraction agent, as well as comprising means for penetrating the capsule (22) in the capsule holder (2), the capsule holder (2) being pivotable by a manually or motor-driven drive system between a loading position for receiving the capsule (22), a brewing position with closed brewing chamber, an ejection position for ejecting the capsule (22), and back into the loading position, the capsule holder (2) being configured as a sleeve being open at both ends, and two closure parts (3, 4) with respective means (9, 10) for penetrating the capsule (22) in the capsule holder (2) being provided, a first closure part (3) being movable along a longitudinal axis of the brewing chamber in the direction of the insertion opening of the capsule holder (2) and against this direction, and at least in the closure position being able to be pressed tightly against the insertion opening, a second closure part (4) being displaceable along the longitudinal axis of the brewing chamber and being adjustable in the direction of the end of the capsule holder (2) directed away from the insertion opening and against this direction, so that at least in the closure position it is tightly pressed against the end of the capsule holder (2), **characterized in that** the brewing unit comprises a rotatably mounted capsule holder (2) and one first and second closure part (3, 4) each displaceable in the direction of the longitudinal axis of the brewing chamber, the chamber comprising crank wheels (5) with connecting rods (6) supported in side walls, and the first closure part (3) is movable by means of the crank wheels (5), the second closure part (4) is movable by means of the connecting rods (6), and the capsule holder (2) is rotatable by means of cams of the crank wheels (5).

2. A brewing unit for a vending machine for producing a brewed beverage, for instance coffee, comprising a brewing chamber, a capsule holder (2) rotatably mounted in the brewing chamber for receiving a capsule (22) with an extraction material for the brewed beverage, at least one movable closure part located in the brewing chamber for closing the capsule holder (2) and for forming an extraction chamber that can be flowed through by a liquid extraction agent, as well as comprising means for penetrating the capsule (22) in the capsule holder (2), the capsule holder (2) being pivotable by a manually or motor-driven drive system between a loading position for receiving the capsule (22), a brewing position with closed brewing chamber, an ejection position for ejecting the capsule (22), and back into the loading position, the capsule holder (2) being configured as a sleeve being open at both ends, and two closure parts (3, 4) with respective means (9, 10) for penetrating the capsule (22) in the capsule holder (2) being provided, a first closure part (3) being movable along a longitudinal axis of the brewing chamber in the direction of the insertion opening of the capsule holder (2) and against this direction, and at least in the closure position being able to be pressed tightly against the insertion opening, **characterized in that** a second closure part (4) is non-displaceably arranged in the brewing chamber, the capsule holder (2) being displaceable along the longitudinal axis of the brewing chamber and at least in the closure position being pressed, with its end directed from the insertion opening, tightly against the second closure part (4), and that the brewing unit comprises a rotatably mounted capsule holder (2) being movable in the direction of the longitudinal axis of the brewing chamber, the first closure part (3) being movable in the direction of the longitudinal axis of the brewing chamber as well as the stationary second closure part (4), the chamber comprising crank wheels (5) with connecting rods (6) supported in side walls, and the first closure part (3) is movable by means of the connecting rods (6), and the capsule holder (2) is rotatable by means of cams and control curves of the crank wheels (5) and is movable in the direction of the longitudinal axis.

3. The brewing unit according to one of claims 1 or 2, **characterized in that** the crank wheels (5) can be driven by means of a stepper motor (8) with a drive shaft (7).

## Revendications

1. Groupe d'infusion pour une machine automatique pour la préparation d'une boisson infusée, par exemple café, comprenant une chambre d'infusion, un support de capsule (2) monté en rotation dans la chambre d'infusion à recevoir une capsule (22) avec un matériau d'extraction pour la boisson infusée, au moins une pièce de fermeture déplaçable située dans la chambre d'infusion pour fermer le support de capsule (2) et pour former une chambre d'extraction qui peut être passée par un agent d'extraction liquide, aussi bien que comprenant des moyens pour pénétrer la capsule (22) dans le support de capsule (2), le support de capsule (2) pouvant pivoter par un système d'entraînement manuel ou motorisé entre une position de chargement à recevoir la capsule (22), une position d'infusion à chambre d'infusion fermée, une position d'éjection pour éjecter la capsule (22), et en retour dans la position de chargement, le support de capsule (2) étant configuré de manière d'une douille ouverte aux deux extrémités, et deux pièces de fermeture (3, 4) chacune avec des moyens (9, 10) pour pénétrer la capsule (22) dans le support de capsule (2) étant prévues, une première pièce de fermeture (3) étant déplaçable le long d'un axe longitudinal de la chambre d'infusion dans la direction de l'ouverture d'insertion du support de capsule (2) et contrairement à cette direction, et au moins dans la position de fermeture pouvant être poussée étroitement contre l'ouverture d'insertion, une deuxième pièce de fermeture (4) étant déplaçable le long de l'axe longitudinal dans la chambre d'infusion et étant réglable dans la direction de l'extrémité du support de capsule (2) éloignée de l'ouverture d'insertion et contrairement à cette direction, de façon qu'au moins dans la position de fermeture elle soit étroitement poussée contre l'extrémité du support de capsule (2), **caractérisé en ce que** le groupe d'infusion comprend un support de capsule (2) monté en rotation et la première et deuxième pièce de fermeture (3, 4) chacune déplaçable dans la direction de l'axe longitudinal de la chambre d'infusion, la chambre comprenant des poulies à bielle (5) avec des tiges de liaison (6) montées dans des parois latérales, et la première pièce de fermeture (3) est déplaçable au moyen des poulies à bielle (5), la deuxième pièce de fermeture (4) est déplaçable au moyen des tiges de liaison (6), et le support de capsule (2) peut tourner au moyen de cames des poulies à bielle(5).

2. Groupe d'infusion pour une machine automatique pour la préparation d'une boisson infusée, par exemple café, comprenant une chambre d'infusion, un support de capsule (2) monté en rotation dans la chambre d'infusion à recevoir une capsule (22) avec un matériau d'extraction pour la boisson infusée, au moins une pièce de fermeture déplaçable située dans la chambre d'infusion pour fermer le support de capsule (2) et pour former une chambre d'extraction qui peut être passée par un agent d'extraction liquide, aussi bien que comprenant des moyens pour pénétrer la capsule (22) dans le support de capsule (2), le support de capsule (2) pouvant pivoter par un système d'entraînement manuel ou motorisé entre une position de chargement à recevoir la capsule (22), une position d'infusion à chambre d'infusion fermée, une position d'éjection pour éjecter la capsule (22), et en retour dans la position de chargement, le support de capsule (2) étant configuré de manière d'une douille ouverte aux deux extrémités, et deux pièces de fermeture (3, 4) chacune avec des moyens (9, 10) pour pénétrer la capsule (22) dans le support de capsule (2) étant prévues, une première pièce de fermeture (3) étant déplaçable le long d'un axe longitudinal de la chambre d'infusion dans la direction de l'ouverture d'insertion du support de capsule (2) et contrairement à cette direction, et au moins dans la position de fermeture pouvant être poussée étroitement contre l'ouverture d'insertion, **caractérisé en ce qu'**une deuxième pièce de fermeture (4) est arrangée de manière non coulissante dans la chambre d'infusion, le support de capsule (2) étant déplaçable le long de l'axe longitudinal de la chambre d'infusion et au moins dans la position de fermeture étant poussé, avec son extrémité opposée à l'ouverture d'insertion, étroitement contre la deuxième pièce de fermeture (4), et que le groupe d'infusion comprend un support de capsule (2) monté en rotation et étant déplaçable dans la direction de l'axe longitudinal de la chambre d'infusion, la première pièce de fermeture (3) étant déplaçable dans la direction de l'axe longitudinal de la chambre d'infusion aussi bien que la deuxième pièce de fermeture (4) stationnaire, la chambre comprenant des poulies à bielle (5) avec des tiges de liaison (6) montées dans des parois latérales, et la première pièce de fermeture (3) est déplaçable au moyen des tiges de liaison (6), et le support de capsule (2) peut tourner au moyen de cames et organes de commande des poulies à bielle (5) et est déplaçable dans la direction de l'axe longitudinal.

3. Groupe d'infusion selon une des revendications 1 ou 2, **caractérisé en ce que** les poulies à bielle (5) peuvent être entraînées au moyen d'un moteur pas à pas (8) avec un arbre d'entraînement (7).
